Europäisches Patentamt

European Patent Office

Office européen des brevets

(11) Publication number: **0 278 138 B1**

# EUROPEAN PATENT SPECIFICATION

(45) Date of publication of patent specification: **17.07.91**  (51) Int. Cl.⁵: **F16N 11/10**

(21) Application number: **87301188.6**

(22) Date of filing: **11.02.87**

(54) Lubricating apparatus.

(43) Date of publication of application:
**17.08.88 Bulletin 88/33**

(45) Publication of the grant of the patent:
**17.07.91 Bulletin 91/29**

(84) Designated Contracting States:
**AT BE CH DE ES FR GB IT LI NL SE**

(56) References cited:
**EP-A- 0 209 926**   **DE-A- 2 520 241**
**DE-C- 886 679**    **US-A- 4 235 427**
**US-A- 4 310 404**   **US-A- 4 671 386**

(73) Proprietor: **Orlitzky, Anton**
**5291 6th Avenue**
**Delta British Columbia V7M 1L6(CA)**

(72) Inventor: **Orlitzky, Anton**
**5291 6th Avenue**
**Delta British Columbia V7M 1L6(CA)**

(74) Representative: **Parry, Christopher Stephen et al**
**PAGE, WHITE & FARRER 54 Doughty Street**
**London WC1N 2LS(GB)**

Rank Xerox (UK) Business Services

## Description

This invention relates to a lubricating apparatus, particularly an apparatus able to provide grease automatically to a location to be lubricated, for example a bearing, without manual attendance.

Automatic greasing apparatus are well known. They provide the great virtue of providing a constant supply of lubricant to a bearing, or indeed anything that needs to be lubricated, without manual interference. That is it is not necessary to keep a schedule of what bearings have been lubricated and what have not and when the bearings should be lubricated. The automatic apparatus simply provides a constant flow of grease.

The principal method of forcing the grease to the place to be lubricated is by gas pressure. The gas pressure may be developed by chemical reaction and the pressure developed, as a result of gas development, is used to force grease from the container, down a grease line to the bearing.

The apparatus is reliable and long-lasting. Indeed apparatus developed by applicant is able to provide lubrication of a bearing for up to 3 years which is extremely desirable, especially where it can be difficult for a man to reach to carry out the necessary lubrication.

In prior art automatic greasing apparatus it is usual to incorporate a neoprene or rubber diaphragm. The gas acts against the diaphragm, stretching it to move a piston to move grease out of a grease chamber. An example of lubricating apparatus which incorporates a neoprene or rubber diaphragm is disclosed in DE-A-2520241.

However, there are a number of disadvantages with the use of rubber and neoprene diaphragms principally because such diaphragms do not react in a uniform manner to pressure or to temperature. Furthermore their resistance temperature is not particularly good, especially the resistance to low temperature. As a result the characteristics of the diaphragm can change markedly and this, of course, can have an effect on the lubricating capability of the apparatus.

In EP-A-0209926 lubricating apparatus is described in which the neoprene or rubber diaphragm has been replaced by an expandable member or bellows resting against a piston which is movable to dispense lubricant from a lubricant chamber. However, the apparatus described in this document does not provide means for varying gas generation in response to variation in the ambient pressure.

The present invention seeks to provide a means of avoiding inconstant response of the apparatus by providing a component that allows the apparatus to withstand wide variations in temperature, with a consistent response and, similarly, wide variations in pressure, again with a constant response and in addition, means for varying gas pressure in response to variations in ambient pressure.

Accordingly the present invention provides lubricating apparatus comprising a lubricating chamber having an outlet through which lubricant within the lubricating chamber may be forced; a reaction chamber within which gas is generated; and a bellows having a hollow interior in communication with the reaction chamber, the bellows being situated so as to force lubricant through the outlet of the lubricating chamber when gas is generated in the reaction chamber characterised in that the reaction chamber is adapted to function from a power source and a plurality of resistors and switch means operable to permit variation of persistence of the resistors are provided connected in a circuit connecting the power source to the reaction chamber so as to control the rate of gas generation, the circuit including an electronic circuit able to compensate for variations in ambient pressure.

Aspects of the invention are illustrated, merely by way of example, in the accompanying drawings in which:

Figure 1 is a perspective view of a lubricating apparatus according to the present invention;

Figure 2 is a bottom plan view of the lubricating apparatus of the invention with its base member removed;

Figure 3 is a section on the line 3-3 in Figure 2;

Figure 4 is a detail of bellows useful in the apparatus of the present invention;

Figure 5 is a diagram of a circuit showing the resistors and switches of the present invention;

Figure 6 illustrates a circuit in accordance with the present invention;

Figure 7 illustrates a modification of the circuit of Figure 6; and

Figure 8 illustrates a simple circuit diagram using an external power source.

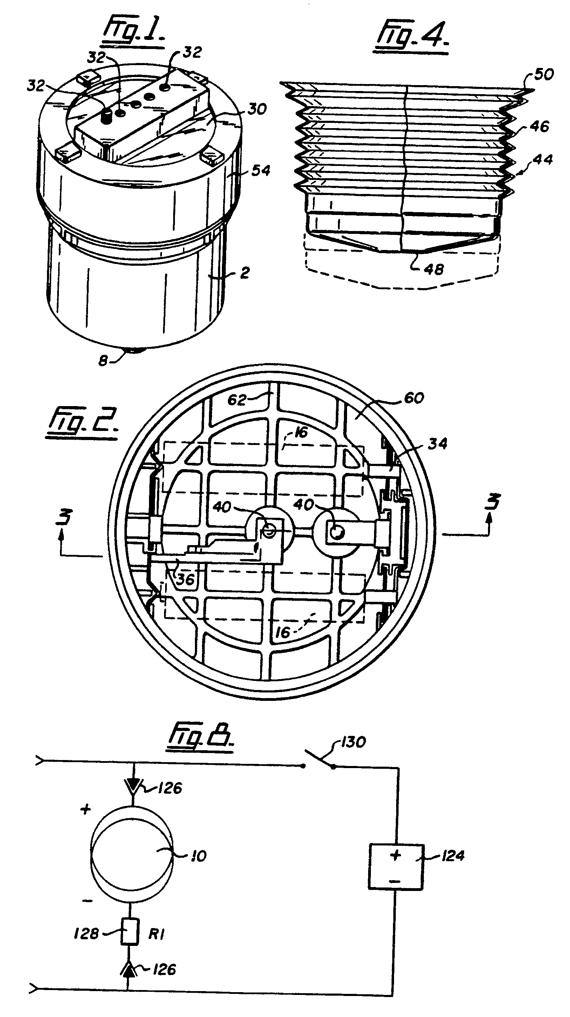

The drawings show a lubricating apparatus comprising, as shown particularly in Figure 3, lubricant chamber 2 having an outlet 4 for lubricant. In the drawing, which is simply of the apparatus, not in its working position, the outlet 4 is blocked with a plug 6, removed when the device is to be used. A grease line can then be attached on threaded portion 8.

There is a gas generating device to generate gas to develop pressure. These means are well known and may for example, comprise a reaction chamber 10 having an anode 12 and a cathode 14. Batteries 16 are provided to provide voltage across the anode 12 and the cathode. The reaction chamber 10 may contain any chemical composition that, upon the application of a voltage, generates the gas. Typically, for convenience of storage the reactants are absorbed on a sponge.

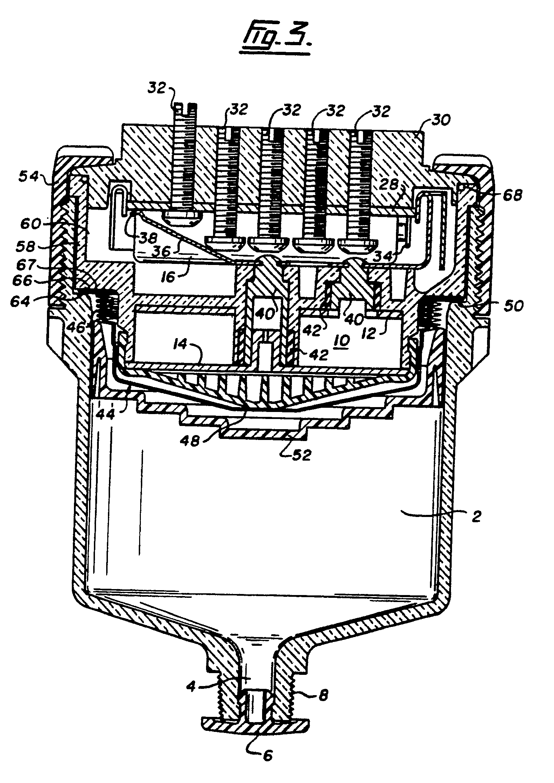

There are a plurality of resistors 18 (see Figures 5, 6 and 7) between the batteries 16 and the electrodes 12 and 14. Resistors 18, 20, 22, 24 and 26 are mounted in a printed circuit board (PCB) 28 attached to base member 30. The printed circuit board has the resistors 18 to 26 located on it and, of course, communicating with the printed, copper circuit. Screws 32 act as switches. One screw 32 is shown extending externally of the base member 30 so that its head makes a contact for the printed circuit and introduces a resistor into the circuit. the resistors 18 to 26 are a predetermined value as indicated in Figure 5. Typically the exterior of the device, usually the base member 30, will be marked with an indication of time. That is if one resistor 18 to 26 is brought into contact by moving a screw 32 so that its head completes the circuit (see the left screw in Figure 3) then the device will be useful for a certain time, after which all the grease will have been expelled from the chamber.

The batteries 16 contact leads 34 and 36 to supply power to the reaction chamber 10 from the printed circuit board. Conductor member 34 takes the power to the anode 12. Conductor 36 takes power to a conductor 38 on the printed circuit board 28 to the cathode 14. The arrangement is conventional, that is the printed circuit board is entirely conventional and not in any way form a part of the present invention. Current is conducted to the reaction chamber 10 through metallic studs 40, insulated from the remainder of the structure by insulating members 42.

The apparatus includes means responsive to the pressure generated by the gas to force lubricant from the chamber. In the present invention the means responsive to the pressure comprises a bellows 44, as most clearly shown in Figure 4. The bellows 44 is typically of polyamide and, in a preferred embodiment is made of the nylon available under the trade mark PEBAX. The bellows is formed with corrugations 46 enabling its expansion and contraction. It is closed at one end 48 and is formed at its base with a flange 50.

A piston 52 is also located in the lubricant chamber 2. In the illustrated embodiment - see Figure 3 - the bellows 44 expands on the generation of gas to push against piston 52 which is a gastight slidable fit within the chamber 2.

The apparatus includes a collar 54 to which the lubricant chamber 2 is threadedly attached at 56. The base member 30 is clamped between the collar 54 and member 58, which includes the reaction chamber 10 and a recess 60 to receive the batteries 16. As shown in Figure 2, member 58 may be formed with bracing ribs 62. Bellows 44 is then clamped by an internal flange 64 on the lubricant chamber 2 abutting a flat 66 on the member 58. Flat 66 may be formed with projection 67 to assist in sealing. O-ring 68 seals base member 30 to member 58.

To use the device of the present invention it is clamped in position with thread 8 attached to a grease line for whatever is desired to be lubricated, typically a bearing. A screw 32, which of course functions as a switch, is withdrawn, depending upon the needed time of operation, as shown to the left in Figure 3 and the circuit across the reaction chamber thus established. Lubricant chamber 2 is, of course, full of grease. As the gas is generated it expands bellows 44 which moves the piston 52 which forces grease from the chamber through outlet 4.

The bellows 44 has a great number of advantages but in particular has the great virtue of consistency of performance. That is regardless of external pressure or temperature the bellows, as illustrated in Figure 4 according to the preferred embodiment of the invention, provides particularly uniform performance. In the prior art as mentioned earlier neoprene and rubber devices have been used, typically in the form of a diaphragm. However the stretch curve of such a diaphragm varies markedly. That is its elastic properties differ markedly depending upon the external pressure and the amount of stretching that it has undergone. Furthermore rubber and neoprene have less desirable temperature responsive characteristics. Rubber at relatively cold temperatures requires much greater pressures to stretch it and at low temperatures, for example minus $40°$ C, can require such pressure to stretch that it will not be effective in the lubricating apparatus of the type according to the present invention.

The nylon bellows will not become brittle until minus $94°$ C but rubber becomes brittle at about minus $64°$ C.

Various circuits, in particular, built into the printed circuit board 28 on the base member 30 of the apparatus are illustrated in Figures 5, 6, 7 and 8. The circuit of Figure 5 is most simple and comprises a 3 volt power source, typically two AA batteries 16, mounted within the recess 60. A light emitting diode LED 70 is arranged in series with resistor 72 and with transistor 74. A second transistor 76 is in series with the first and emitter 78 communicates with line 80.

Resistors 82, 84 and 86 are positioned in series with a third transistor 88. The electrochemical reactor 10 is arranged as shown particularly in Figure 3 and power supply to the reactor 10 is controlled by resistors 18 to 26, each controlled by switches 32. The arrangement is such that current is applied to the electrochemical reactor and, depending on the number of switches 32 that are closed, the period of reaction within the reactor, and thus of gas generation, is controlled. The LED 70 indicates when current flows in the circuit, that is when the device is in operation.

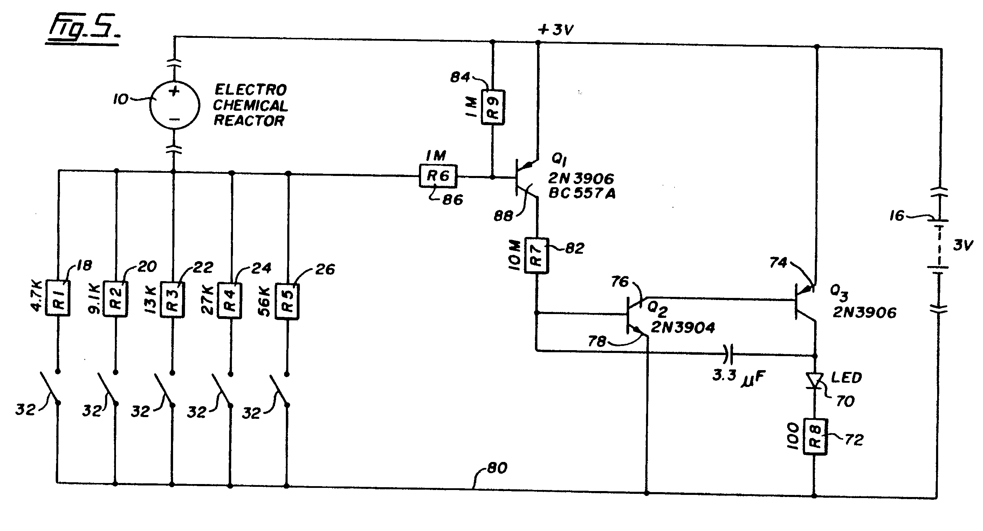

According to the invention, Figure 6 differs from Figure 5 by the provision of a pressure sensing device 90 to vary the current in the circuit depending on ambient pressure. The sensing of ambient pressure permits the operation of a shunt 92 to vary the current to the electrochemical reactor 10 and thus the supply of lubricant. If the external pressure increases then the generated pressure, that is the volume of gas generated, should be increased.

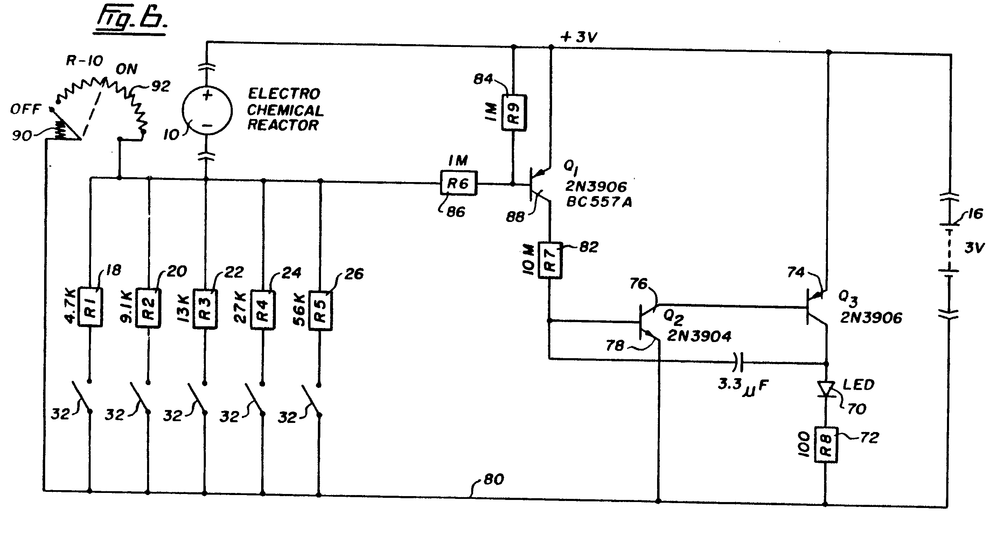

Figure 7 illustrates a more complicated variation of the circuits of Figures 5 and 6. It differs from those circuits by the fact that pressure sensing device 90 is able to shunt any selected timing circuit. In Figure 7 the time for which the device is operable with the numbers of resistors 18 to 26 switched into the circuit is shown.

The circuit again has a current source 16, typically in the form of AA batteries joined in series, across the electrochemical reactor. Resistance 94 is in series with the reactor 10. The circuit has transistor 96 shunted by line 98 containing resistor 100 and transistor 102. Transistor 102 is in series with capacitor 104. An LED 106 is present with resistor 108 in parallel and resistor 110 in series. Capacitor 112 is in series with resistor 110. Transistor 114 is in series with resistor 116 and with transistor 118. Resistor 120 is the equivalent of resistor 84 in the circuit of Figure 6. Transistor 118 is in series with resistor 122.

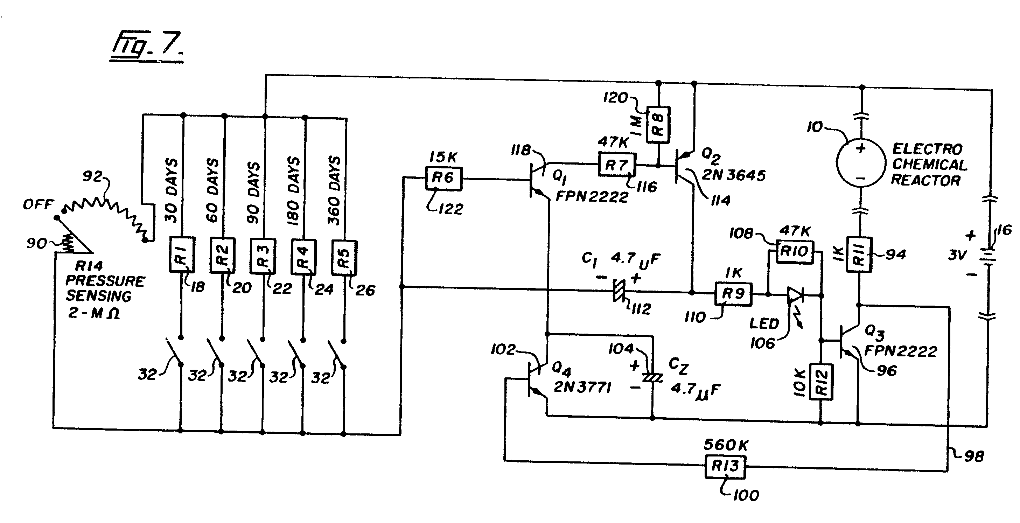

The circuit shown in Figure 8 is a simple indication of the use of an external source 124 feeding through a transformer to provide power to the circuit. The external source 124 may, for example, be a battery of a vehicle, especially where the lubricating apparatus is mounted on a vehicle. The circuit includes sockets 126, resistor 128 and switch 130, typically mounted conveniently, for example on the facia of a vehicle.

## Claims

1. Lubricating apparatus comprising a lubricating chamber (2) having an outlet (4) through which lubricant within the lubricating chamber may be forced; a reaction chamber (10) within which gas is generated; and a bellows (44) having a hollow interior in communication with the reaction chamber (10), the bellows (44) being situated so as to force lubricant through the outlet of the lubricating chamber when gas is generated in the reaction chamber, characterised in that the reaction chamber (10) is adapted to function from a power source and a plurality of resistors (18,20,22,24,26) and switch means (32) operable to permit variation of persistence of the resistors are provided connected in a circuit connecting the power source to the reaction chamber so as to control the rate of gas generation, the circuit including an electronic circuit able to compensate for variations in ambient pressure (90,92).

2. Apparatus as claimed in claim 1 in which the bellows (44) acts against a piston (52) that contacts and moves lubricant through the outlet (4).

3. Apparatus as claimed in claim 1 or claim 2 in which the gas is generated in the reaction chamber (10) by the application of a voltage across an anode (12) and a cathode (14) in the reaction chamber (10).

4. Apparatus as claimed in claim 3 in which the anode (12) and cathode (14) are of carbon fiber.

5. Apparatus as claimed in claim 3 or claim 4 in which the voltage is applied by dry cells (16).

6. Apparatus as claimed in any preceding claim in which the bellows (44) is of a polyamide.

7. Apparatus as claimed in any preceding claim in which the bellows has a base flange (50) to permit its clamping within the device.

8. Apparatus as claimed in any one of the preceding claims including a circuit to allow the application of pulsating power from the power source.

9. Apparatus as claimed in any one of the preceding claims including a circuit (124,126,128,130) enabling operation of the device from an external power source.

## Revendications

1. Appareil de lubrification comprenant : une chambre de lubrification (2) comportant une sortie (4) à travers laquelle peut être forcée un lubrifiant contenu dans la chambre de lubrification ; une chambre de réaction (10) dans laquelle est généré du gaz ; et un soufflet (44) dont l'intérieur est creux et communique avec la chambre de réaction (10), le soufflet (44) étant situé de manière à forcer du lubrifiant à travers la sortie de la chambre de lubrification quand un gaz est généré dans la chambre de réaction, caractérisé en ce que la chambre de réaction (10) est adaptée pour fonctionner à partir d'une alimentation électrique et de plusieurs résistances (18, 20, 22, 24, 26) et en ce que des moyens de commutation (32) opératifs pour permettre une variation de la persistance des résistances sont prévus en connexion dans un circuit reliant l'alimentation à la chambre de réaction de manière à contrôler la vitesse de génération de gaz, le circuit comprenant un circuit électronique capable de compenser des variations de pression ambiante (90, 92).

2. Appareil selon la revendication 1, dans lequel le soufflet (44) agit contre un piston (52) en contact avec le lubrifiant qu'il déplace à travers la sortie (4).

3. Appareil selon l'une des revendications 1 ou 2, dans lequel le gaz est généré dans la chambre de réaction (10) par l'application d'une tension aux bornes d'une anode (12) et d'une cathode (14) dans la chambre de réaction (10).

4. Appareil selon la revendication 3, dans lequel l'anode (12) et la cathode (14) sont en fibre de carbone.

5. Appareil selon l'une des revendications 3 ou 4, dans lequel la tension est appliquée par des éléments de pile sèche (16).

6. Appareil selon l'une quelconque des revendications précédentes dans lequel le soufflet (44) est en un polyamide.

7. Appareil selon l'une quelconque des revendications précédentes dans lequel le soufflet comporte à sa base un flasque (50) permettant son maintien dans le dispositif.

8. Appareil selon l'une quelconque des revendications précédentes comprenant un circuit permettant l'application de puissance en impulsions à partir de l'alimentation.

9. Appareil selon l'une quelconque des revendications précédentes comprenant un circuit (124, 126, 128, 130) permettant le fonctionnement du dispositif à partir d'une alimentation externe.

**Patentansprüche**

1. Schmiervorrichtung umfassend eine Schmierkammer (2) mit einem Auslaß (4), durch welchen in der Schmierkammer befindliches Schmiermittel durchgepreßt werden kann; eine Reaktionskammer (10), in welcher Gas erzeugt wird; und einen Faltenbalg (44) mit einem mit der Reaktionskammer (10) verbundenen hohlen Innenraum, wobei der Faltenbalg (44) so angeordnet ist, daß er Schmiermittel durch den Auslaß der Schmierkammer preßt, wenn Gas in der Reaktionskammer erzeugt wird, dadurch gekennzeichnet, daß die Reaktionskammer (10) so ausgelegt ist, daß sie von einer Stromquelle aus funktioniert und daß eine Mehrzahl von Widerständen (18, 20, 22, 24, 26) und Schaltmitteln (32), die zur Ermöglichung einer Veränderung der Wirkungsdauer der Widerstände betätigbar sind, so vorgesehen sind, daß sie in einem die Stromquelle mit der Reaktionskammer verbindenden Schaltkreis eingebunden sind, um die Geschwindigkeit der Gaserzeugung zu steuern, wobei der Schaltkreis eine elektronische Schaltung umfaßt, die Variationen im Umgebungsdruck (90, 92) kompensieren kann.

2. Vorrichtung, wie in Anspruch 1 beansprucht, worin der Faltenbalg (44) gegen einen Kolben (52) wirkt, der mit Schmiermittel in Kontakt gelangt und dieses durch den Auslaß (4) bewegt.

3. Vorrichtung, wie in Anspruch 1 oder Anspruch 2 beansprucht, worin das Gas in der Reaktionskammer (10) durch Anlegen einer Spannung über eine Anode (12) und eine Kathode (14) in der Reaktionskammer (10) erzeugt wird.

4. Vorrichtung, wie in Anspruch 3 beansprucht, worin die Anode (12) und die Kathode (14) aus Kohlenstoffaser bestehen.

5. Vorrichtung, wie in Anspruch 3 oder Anspruch 4 beansprucht, worin die Spannung durch Trockenzellen (16) angelegt wird.

6. Vorrichtung, wie in einem vorhergehenden Anspruch beansprucht, worin der Faltenbalg (44) aus einem Polyamid besteht.

7. Vorrichtung, wie in einem vorhergehenden Anspruch beansprucht, worin der Faltenbalg einen Basisflansch (50) aufweist, der sein Festklemmen innerhalb der Vorrichtung gestattet.

8. Vorrichtung, wie in einem der vorhergehenden Ansprüche beansprucht, umfassend einen Schaltkreis zur Ermöglichung der Anlegung eines pulsierenden Stroms von einer Stromquelle.

9. Vorrichtung, wie in einem der vorhergehenden Ansprüche beansprucht, umfassend einen Schaltkreis (124, 126, 128, 130), der die Betätigung der Vorrichtung von einer äußeren Stromquelle aus ermöglicht.

Fig. 1.

Fig. 4.

Fig. 2.

Fig. 6.

_Fig.3._

Fig.5.

ELECTRO CHEMICAL REACTOR

+3V

3V

EP 0 278 138 B1

Fig.6.

EP 0 278 138 B1

Fig. 7.

EP 0 278 138 B1